# EUROPEAN PATENT APPLICATION

(11) **EP 4 478 648 A1**
(43) Date of publication of application: **18.12.2024**
(21) Application number: 24181936.6
(22) Date of filing: 13.06.2024
(51) Int. Cl.: H04L 5/00

(54) **A METHOD TO IMPROVE 5G NR PDCCH DECODING USING CCE INTERFERENCE RANDOMIZATION**

(30) Priority: 13.06.2023 IN 202321040213; 31.05.2024 US 202418679779
(71) Applicant: Mavenir Systems, Inc., Richardson, TX 75081 (US)
(72) Inventor: CHANDRAN, Ramesh, 560102 Bangalore (IN); LEELAHAKRIENGKRAI, Rangsan, Allen, 75013 (US)
(74) Representative: dompatent von Kreisler Selting Werner - Partnerschaft von Patent- und Rechtsanwälten mbB

(57) **Abstract**

A method that uses CCE randomization to improve the detectability of PDCCH transmission in 5G NR applications to increase the RACH success rate and throughput at the system level. The method includes allocating PDCCH CCE for CORESETs for nearby sectors to be separated by frequency and/or by time providing differing Start CCE indexes for CORESETs according to the aggregation levels in PDCCH transmission.

## Description

### BACKGROUND

### 1. Field of the Disclosure

The present disclosure relates to systems and methods to improve the detectability of Physical Downlink Control Channel (PDCCH) transmission by Control Channel Element (CCE) randomization, which increases the Random Access Channel (RACH) success rate and throughput at the system level.

### 2. Description of Related Art

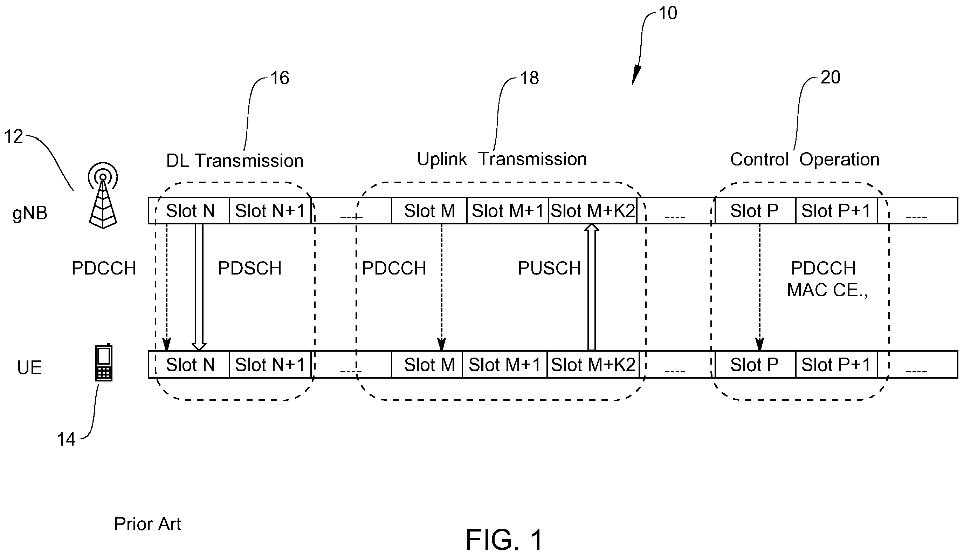

Physical Downlink Control Channel (PDCCH) is used to carry Downlink Control Information (DCI) for transmitting Physical Downlink Shared Channel (PDSCH), Physical Uplink Shared Channel (PUSCH), Medium Access Control (MAC) level information for a single or group of User Equipment (UE). FIG. 1 illustrates the functionality of PDCCH transmission for various scenarios including downlink transmission, uplink transmission, and control operations.

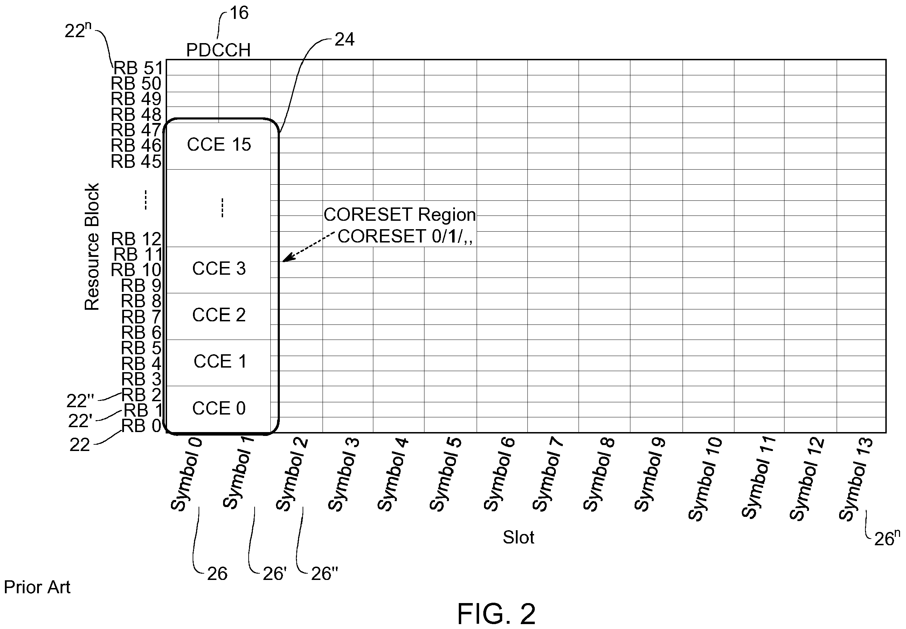

PDCCH transmission in 5G New Radio (NR) is designed in the form of Control Resource Set (CORESET) based transmission. CORESET defines the control region in a slot in terms of Orthogonal Frequency Division Multiplexing (OFDM) symbols and Resource Block (RBs). For example, CORESET transmission over two symbol duration and 10 MHz bandwidth is shown in FIG. 2.

The number of available Control Channel Elements (CCE) for various Bandwidths and PDCCH Symbol duration is given in Table 1 below.

**Table 1**

| **BW** | **Number of CCEs** |
|---|---|
| 5 MHz | 8 CCE |
| 10 MHz | 16 CCE |
| 20 MHz | 32 CCE |

CCEs are allocated to UEs in an interleaved or non-interleaved manner. For CORESET 0, it is mandatory to have interleaved CCE allocation as per 3GPP specifications.

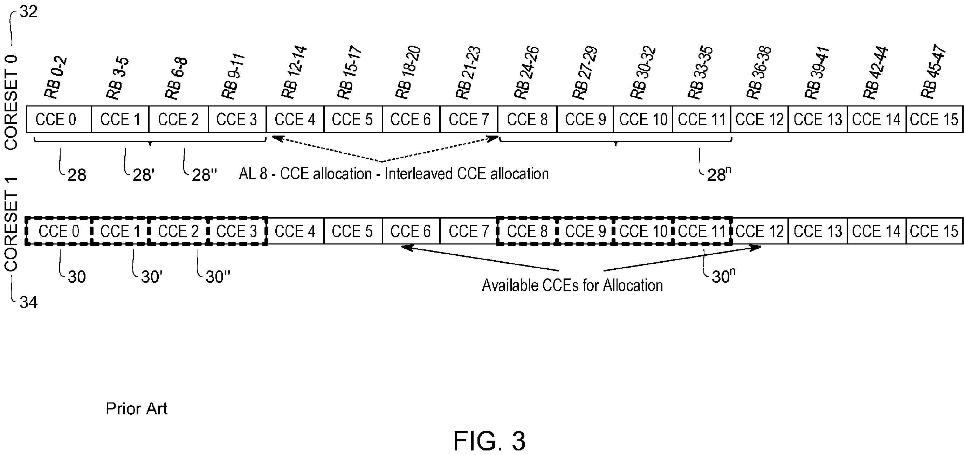

PDCCH transmission for a UE is carried out based on aggregation levels. Aggregation Level (AL) is quantified in terms of the number of CCEs that it occupies. The number of CCEs in PDCCH CORESET depends on the dimension of the CORESET. There can be more than one CORESET configured for the UE, which may be transmitted in an overlapping or nonoverlapping manner. More than one CORESET can be configured for UE based on Search Space requirements. The location of the CORESETs depends on the number of PDCCH Symbols reserved for Downlink Transmission. CCE allocation for CORESET 0 and CORESET 1 is, for example, illustrated in FIG. 3. CCE allocation for AL 8 candidate in CORESET 0 occupies interleaved 8 CCEs of CCE 0 - 3 and CCE 8 - 11. The remaining CCEs will be allocated for further PDCCH transmission in the configured CORESETs. In general, CCEs in CORESET 0 is used for common search space-based transmission like MSG 2, MSG 4, System Information (SI), paging etc., and CCEs in CORESET 1 is used for UE specific based search space-based transmission.

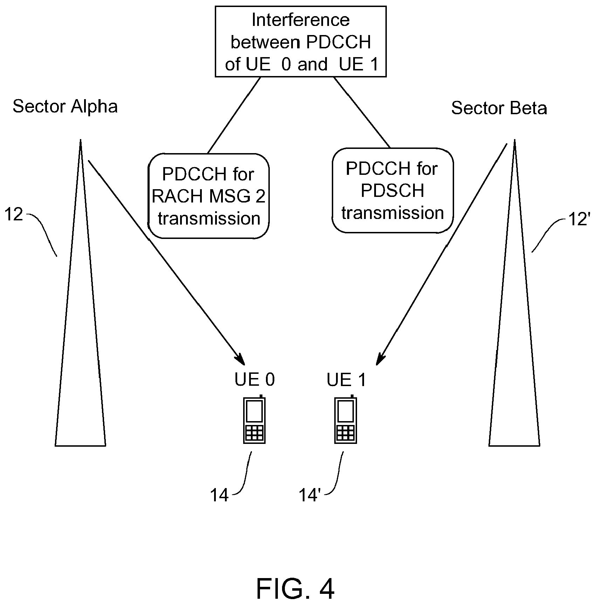

Based on testing, it has been determined that there is a significant degradation in RACH successful transmission due to overlapping of PDCCH CCE transmission for MSG 2 / MSG 4 with other cell PDCCH CORESET 1 CCE transmission when Inter-cell Interference is present with nearby sectors, which is illustrated in FIG. 4.

PDCCH interference caused by PDCCH CCE collision from nearby or adjacent sectors can be significant. The test indicated there are many PDCCH failure rates in the serving sector for MSG 2 PDCCH reception. The MSG 2 decoding failure percentage increased to 30 %, which caused RACH attach success rate to degrade significantly.

Accordingly, a major issue faced is how to optimize CCE positions for CORESETs to maximize the probability of PDCCH decoding.

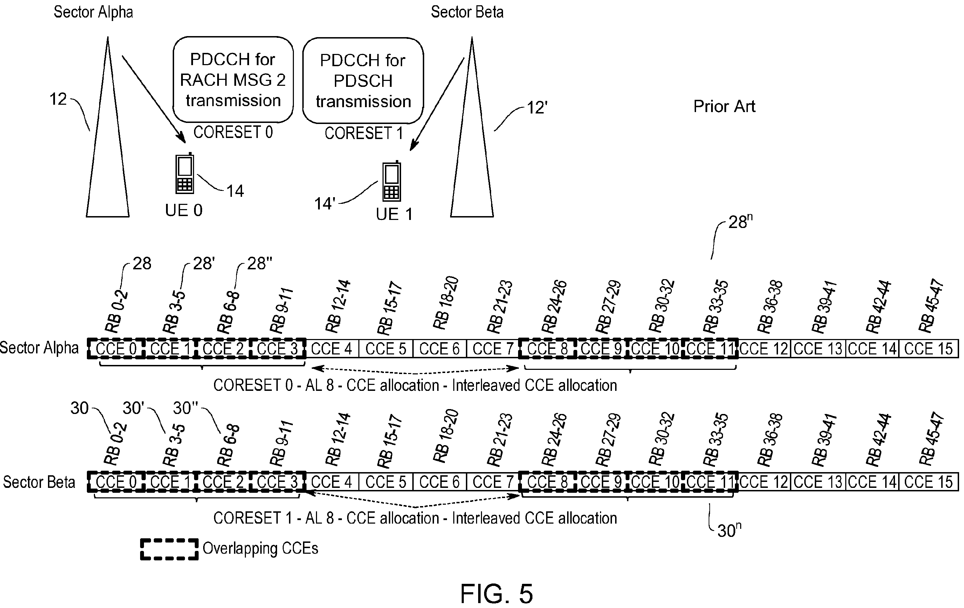

Current designs have PDCCH CCE resources for MSG 2 transmissions overlapping with nearby PDCCH CORESET 1 CCE transmission that are in the same frequency locations. The existing design of MSG 2 PDCCH CCE mapping using Random Access Radio Network Temporary Identifier (RA-RNTI) for bandwidth of 10 MHz system is illustrated in FIG. 5. MSG 2 PDCCH CCE locations overlap with CORESET 1 CCEs. These are for PDSCH or PUSCH transmission in other sectors. This known configuration, however, will likely cause significant interference and degrade system performance.

The above problem cannot be solved by increasing the PDCCH transmission power levels for better decoding, which can function to increase interference at a system level. Further, this problem cannot be addressed by separating PDCCH transmission in time as that will negatively impact the system level throughput.

Accordingly, there is a need for method that will improve 5G PDCCH decoding that overcomes, alleviates, and/or mitigates one or more of the aforementioned and other deleterious effects of prior art.

### SUMMARY

What is desired is to provide a system and method for improving the accuracy of PDCCH decoding.

It is also desired to provide a system and method that increases the detectability of PDCCH transmission.

It is further desired to provide a system and method that increases RACH success rate and throughput at the system level.

It is still further desired to provide a system and method to optimize CCE positions for CORESETs to maximize the probability of PDCCH decoding.

These and other objects are achieved by the provision of a system that utilizes CCE randomization to improve the detectability of PDCCH transmission in, for example, 5G NR applications, which increases the RACH success rate and throughput at the system level. A method is provided for allocating PDCCH CCE for CORESETs for nearby sectors separated by frequency and/or by time for better PDCCH reception.

In one configuration, the system configures differing Start CCE indexes for CORESETs according to the aggregation levels in PDCCH transmission to increase the PDCCH decoding rate. The system configures the Start CCEs as per the CORESETs (e.g., CORESET-0 & CORESET-1 from different sectors) to maintain CCE orthogonality across the sectors for initial transmission. The differing start CCE indexes means the system configures CCEs for CORSET-0 from a first group, and the system configures CCEs for CORESET-1 from a second group for data transmission. This functions to randomize interference. It should be noted that CCE indexes are offsets by Aggregation Level and based on Interleaved or Non-interleaved CCE mapping.

For this application the following terms and definitions shall apply:

Third generation partnership project (3GPP) is a partnership of seven telecommunications standard development organizations that produces reports and specifications for mobile networks.

g NodeB (gNB) is the radio base station in 5G NR networks. These radio base stations (nodes) are the cell towers mobile operators use to connect mobile phones.

User Equipment (UE) refers to the end-user device that connects to a wireless network to access various services and applications.

Physical Uplink Share Channel (PUSCH) is a channel responsible for carrying user data from the User Equipment (UE) to the base station.

Physical Downlink Control Channel (PDCCH) is a channel that controls the transmission and reception of UL and DL data by transmitting Downlink Control Information (DCI).

Physical Random Access Channel (PRACH) and is used by UEs to request an uplink allocation from a base station.

Random Access Channel (RACH) is an UL transmission used UE to initiate synchronization with an evolved NodeB (eNodeB).

Radio Access Network (RAN) is the part of a communications system that traditionally connects cellular wireless capable (e.g., 4G LTE, 5G) devices back to a public and / or private mobile core network via an existing network backbone.

Synchronization Signaling Block (SSB) carries specific signals for establishing DL synchronization.

Physical Resource Block (PRB) is a block made up of 12 consecutive subcarriers.

Master Information Block (MIB) is a block that provides the information needed by the mobile device to read a Physical Downlink Shared Channel (PDSCH).

System Information Block (SIB1) is a block that carries all the basic information for UE to perform the initial attachment procedure at least up to RrcSetup.

Other System Information (OSI) means Other SI (i.e., SIBs other than SIB1).

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

In one configuration, a method of controlling a cellular communication system is provided comprising the steps of: providing a first cellular site communicating with a first User Equipment (UE) and a second UE, and providing a Medium Access Control (MAC) module, the MAC module responsible for allocating Physical Downlink Control Channel (PDCCH) Control Channel Elements (CCEs) for Physical Downlink Shared Channel (PDSCH), Physical Uplink Shared Channel (PUSCH) and control information transmission. The method further comprises the steps of: allocating a first start CCE index for a first Control Resource Set (CORESET-0) with the MAC module for the first UE, and allocating a second start CCE index for a second Control Resource Set (CORESET-1) with the MAC module for the second UE. The method is provided such that the start CCE index for CORESET-0 is offset from the start CCE index for CORESET-1 such that PDCCH CCE collision minimized and PDCCH decoding is improved for the first UE and the second UE.

In another configuration, a system for controlling a cellular communication system is provided comprising a first cellular site communicating with a first User Equipment (UE) and a second UE, and a Medium Access Control (MAC) module responsible for allocating Physical Downlink Control Channel (PDCCH) Control Channel Elements (CCEs) for Physical Downlink Shared Channel (PDSCH), Physical Uplink Shared Channel (PUSCH) and control information transmission. The system is provided such that a first start CCE index is allocated for a first Control Resource Set (CORESET-0) by the MAC module for the first UE, a second start CCE index is allocated for a second Control Resource Set (CORESET-1) by the MAC module for the second UE, and the first start CCE index for CORESET-0 is offset from the second start CCE index for CORESET-1 such that PDCCH CCE collision minimized and PDCCH decoding is improved for the first UE and the second UE.

The above-described and other features and advantages of the present disclosure will be appreciated and understood by those skilled in the art from the following detailed description, drawings, and appended claims.

### DESCRIPTION OF THE DRAWINGS

FIG. 1 illustrates various scenarios for PDCCH transmission in a cellular system according to the prior art;
FIG. 2 illustrates the CORESET region in a slot dimensioned by number of Resource Block (RBs) and Orthogonal Frequency Division Multiplexing (OFDM) symbols according to the prior art;
FIG. 3 illustrates CCE mapping for CORESETs according to the prior art;
FIG. 4 illustrates a problem with PDCCH interference with known cellular system configurations;
FIG. 5 illustrates the overlapping of 8 CCEs between Sectors Alpha and Beta according to the configuration of FIG. 4;
FIG. 6 illustrates a solution to the interference problem illustrated in FIG. 4 according to the present invention;
FIG. 7 illustrates the applicability of the solution of FIG. 6 for 3-sector scenarios;
FIG. 8 illustrates a design variation of the solution according to FIG. 6; and
FIG. 9 illustrates another design variation of the solution according to FIG. 6.

### DETAILED DESCRIPTION

Referring now to the drawings, wherein like reference numerals designate corresponding structure throughout the views.

FIG. 1 diagrammatically illustrates scenarios for various data transmissions including, for example, Physical Downlink Control Channel (PDCCH) transmission in a cellular system 10 that includes next generation NodeB (gNB) 12 and User Equipment (UE) 14 according to known configurations. These scenarios can include various data transmissions such as, Downlink Control Information (DCI) in PDCCH transmission for Physical Downlink Shared Channel (PDSCH) 16, Physical Uplink Shared Channel (PUSCH) 18, and other Control Operations / control information 20.

FIG. 2 illustrates resource block usage for PDCCH including the CORESET region 24 in a slot dimensioned by a select number of Resource Blocks (RBs) 22, 22', 22" ... 22ⁿ and Orthogonal Frequency Division Multiplexing (OFDM) symbols 26, 26', 26" ... 26ⁿ according to the prior art. In this example, the CORESET Region CORESET 0/1 ranges from CCE 0 to CCE 15.

FIG. 3 illustrates CCE mapping for CORESETs according to one known configuration. This configuration uses overlapping CCEs 28, 28', 28" ... 28ⁿ & 30, 30', 30" ... 30ⁿ between CORESET-0 32 and CORSET-1 34 from different sectors. As was previously explained, this configuration will likely result in degraded performance of PDCCH reception at the UE end.

FIG. 4 illustrates PDCCH interference in a known system configuration. PDCCH transmission in sector Alpha 12 (e.g., from a gNB) for UE0 14 in CORESET-0 32 (FIG. 3) is interfered with by PDCCH for PDSCH transmission of UE1 14' in CORESET-1 34 (FIG. 3) from Sector Beta 12'. This is a common occurrence that has been problematic for many years.

FIG. 5 illustrates the overlapping of, for example, eight CCEs 28, 28', 28" ... 28ⁿ (CCE0 - CCE3 & CCE8 - CCE11) & 30, 30', 30" ... 30ⁿ (CCE0 - CCE3 & CCE8 - CCE11) between Sectors Alpha 12 and Beta 12'. This overlapping (e.g., the use of the same RBs by the same CCE between CORESETs) causes degradation in PDCCH decoding reception for cell edge UEs 14, 14' as variously illustrated. It should be noted that, while only two nearby sectors are illustrated in FIGS. 4 & 5, this scenario can be extended to additional nearby sectors (e.g., sector Alpha 12 may have two additional nearby sectors) resulting in significant interference and decoding errors from all the nearby sectors for edge UE.

It should be noted that, while various functions and methods will be described and presented in a sequence of steps, the sequence has been provided merely as an illustration of one advantageous configuration, and that it is not necessary to perform these functions in the specific order illustrated.

It is further contemplated that any of the following steps may be moved and/or combined relative to any of the other steps and that it may be advantageous, depending upon the application, to utilize all or any portion of the functions described herein.

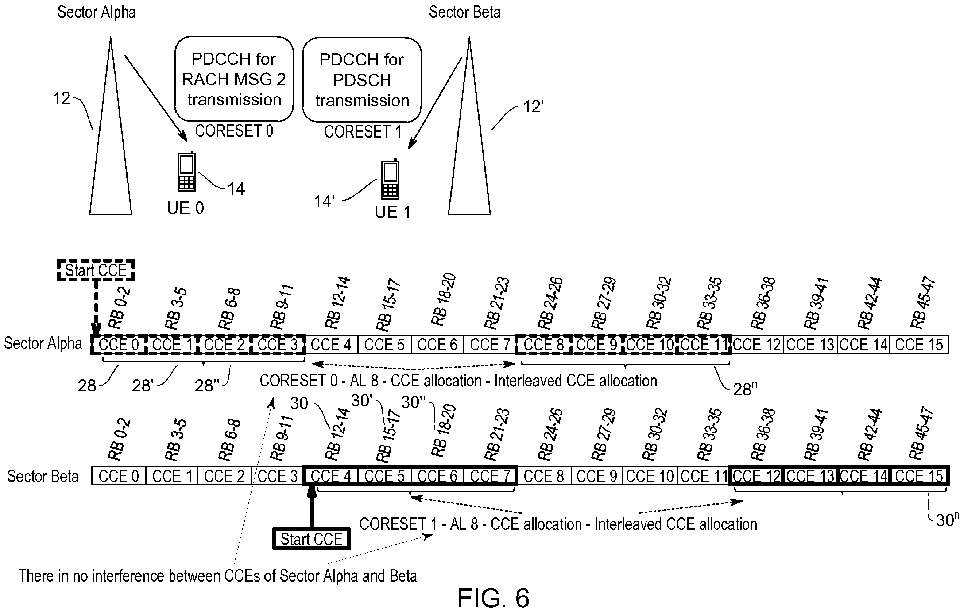

Turning now to FIG. 6, one configuration of the present invention is illustrated in which orthogonality is maintained between CCEs 28, 28', 28" ... 28ⁿ & 30, 30', 30" ... 30ⁿ for CORESET-0 32 and CORESET-1 34 across sectors. In this way, PDCCH decoding probability can be significantly improved for cell edge UEs 14, 14'.

This configuration includes a method for Physical Downlink Control Channel (PDCCH) Start CCE (e.g., the first RB allocated of the eight CCEs associated with a CORESET) allocation for CORESETs 32, 34 separated by CCE indexes as per the Aggregation level. In FIG. 6, the Start CCE 28 corresponds to RB 0, while the Start CCE 30 corresponds to RB 12 with each CCE comprising three RB's. For example, CCE 0 corresponds to RBs 0-2, while CCE 4 corresponds to RBs 12-14. In particular, the system configures the Start CCEs as per the CORESETs (CORESET-0 32 / CORESET-1 34) to maintain CCE orthogonality across the sectors for initial transmission. CCE indexes are offsets by Aggregation Level and based on Interleaved or Non-interleaved CCE mapping.

For 10 MHz bandwidth operation, there are sixteen CCEs that are possible for PDCCH symbol duration of 2. Sector Alpha 12 transmits PDCCH for MSG 2 transmission in CORESET-0 32 and sector Beta 12' transmits PDCCH for PDSCH transmission in CORESET-1 34.

Based on the forgoing, the Start CCE index for CORESET-1 34 in sector Beta 12' is offset by 4 CCEs (or 12 RBs) from Sector Alpha 12 PDCCH CORESET-0 32. Start CCE index for CORESET-1 34 is CCE index 4 starting at RB12, which will not interfere with MSG 2 PDCCH CCEs starting from CCE 0 in sector Alpha 12 starting at RB0.

CCEs allocated for MSG 2 PDCCH are CCE 0-3 (RB0-RB11) and CCE 8-11 (RB24-RB35). These CCEs do not overlap with CCEs for PDSCH in another sector of CCE 4-7 (RB12-RB23) and CCE 12-15 (RB36-RB47).

CORESET-0 32 carries DCI for critical Common information such as for RACH, Paging, SI message, etc., CORESET-1 34 carries DCI for UE 14' specific information like PDSCH.

Using the proposed method, interference between CORESET-0 32 and CORESET-1 34 is almost effectively avoided. Hence the PDCCH decoding performance of critical RACH information like MSG 2/ MSG 4 will be significantly increased.

The invention can be extended to multi-sector scenarios with different carrier bandwidths and PDCCH symbol durations. Some of these scenarios are provided as examples below.

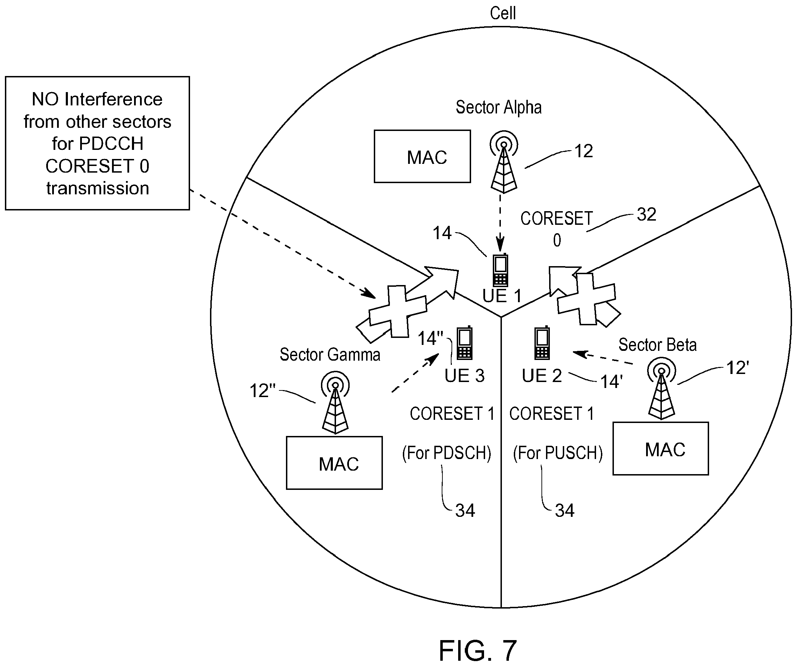

FIG. 7 illustrates the applicability of the method for three sector scenarios. As, there is no interference from sector Gamma 12" and sector Beta 12' in CORESET-1 34 transmission to sector Alpha 12 in CORESET-0 32 transmission.

For three cell scenarios such as illustrated in FIG. 7, there will effectively be no interference between CORESETs during PDCCH transmission across the sectors for edge UE1, UE2, UE3 12, 12', 12" as shown.

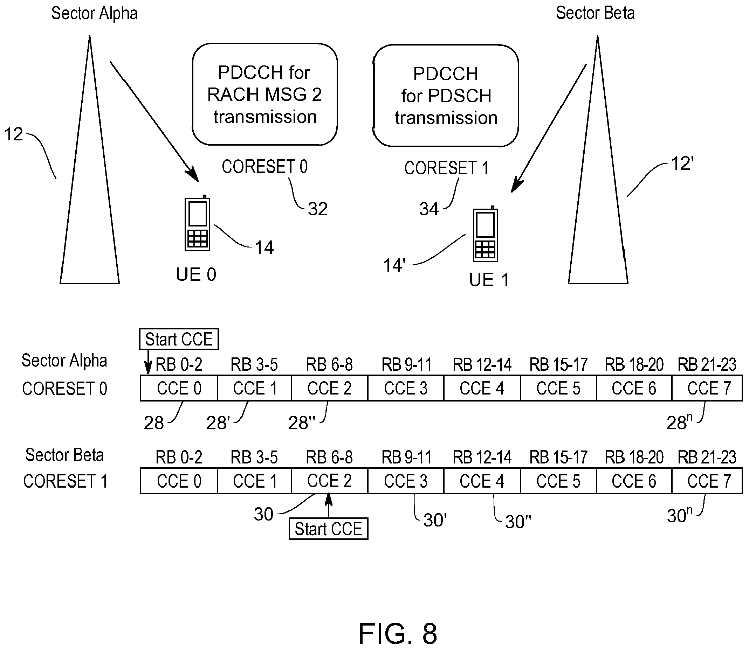

**For carrier Bandwidth of** 5 MHz **and 2 Symbol PDCCH:** FIG. 8 illustrates a design variation for PDCCH CCE index allocation for 5 MHz, 2 symbol PDCCH duration - CORESET-0 32 in sector Alpha 12 and CORESET-1 34 in sector Beta 34 using the proposed method.

The total number of Available CCEs for PDCCH Transmission is eight and each CCE occupies 3 RBs as per the previous examples. The Maximum Aggregation level of four is allocated to UE in an Interleaved or Non-interleaved allocation.

As per the proposed method, there will be a CCE index offset of two that is maintained for CORESET-0 32 and CORESET-1 34, which is orthogonal in the frequency domain as illustrated in FIG. 8. The Start CCE index for CORESET-0 32 is CCE index 0 (RB0) and for CORESET-1 34 is CCE index 2 (RB6).

For CORESET-0 32 AL 4 allocation, CCE 0-1 (RB0-RB5) and CCE 4-5 (RB12-RB17) are considered. For CORESET-1 34 AL 4 allocation, CCE 2-3 (RB6-RB11) and CCE 6-7 (RB18-RB23) are considered.

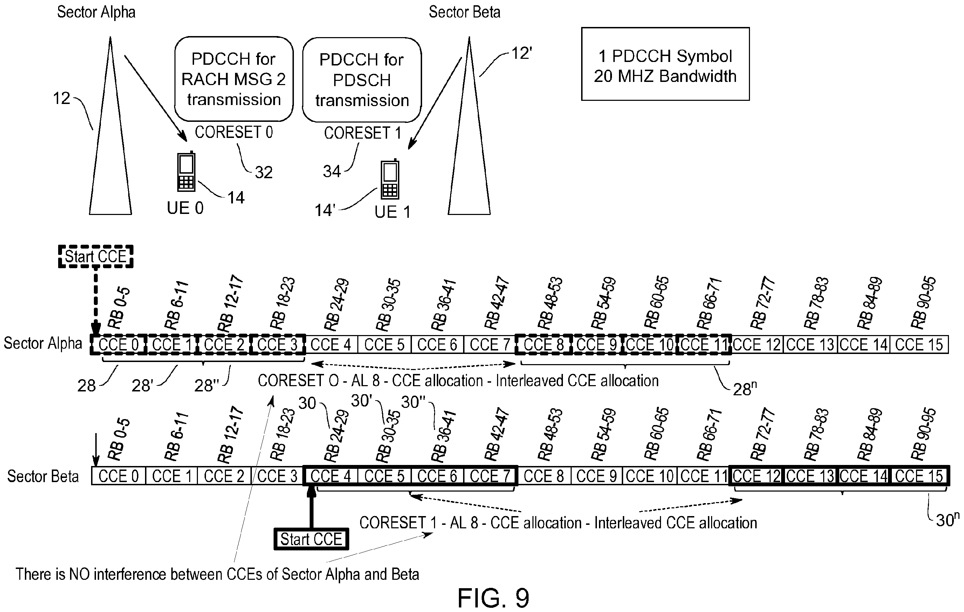

**For carrier Bandwidth of 20 MHz and 1 Symbol PDCCH:** Referring now to FIG. 9, a design variation for PDCCH CCE index allocation for 20 MHz, 1 symbol PDCCH duration is illustrated - CORESET-0 32 in sector Alpha 12 and CORESET-1 34 in sector Beta 34 using the proposed method.

The total number of Available CCEs for PDCCH Transmission is 16 and each CCE occupies 6 RBs as illustrated.

The Maximum Aggregation level 8 is allocated to UE in an Interleaved or Non-interleaved allocation.

As per the proposed method, there will be a CCE index offset of four that is maintained for CORESET-0 32 and CORESET-1 34, which is orthogonal in the frequency domain as illustrated in FIG. 9. The Start CCE index for CORESET-0 32 is CCE index 0 and for CORESET-1 34 is CCE index 4.

For CORESET-0 32 AL 4 allocation, CCE 0-3 (RB0-RB23) and CCE 8-11 (RB48-RB71) are considered. For CORESET-1 34 AL 4 allocation, CCE 4-7 (RB24-RB47) and CCE 12-15 (RB72-RB95) are considered.

The proposed approach of adding CCE offset between CORESET-0 32 and CORESET-1 34 is applicable to various bandwidth configurations and PDCCH symbol duration given in 3GPP specifications.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method of controlling a cellular communication system comprising the steps of:
providing a first cellular site communicating with a first User Equipment (UE) and a second UE;
providing a Medium Access Control (MAC) module, the MAC module responsible for allocating Physical Downlink Control Channel (PDCCH) Control Channel Elements (CCEs) for Physical Downlink Shared Channel (PDSCH), Physical Uplink Shared Channel (PUSCH) and control information transmission;
allocating a first start CCE index for a first Control Resource Set (CORESET-0) with the MAC module for the first UE; and
allocating a second start CCE index for a second Control Resource Set (CORESET-1) with the MAC module for the second UE;
wherein the start CCE index for CORESET-0 is offset from the start CCE index for CORESET-1 so that PDCCH CCE collision is minimized and PDCCH decoding is improved for the first UE and the second UE.

2. The method of claim 1, wherein the first and second start CCE indexes are separated in Frequency or time domain.

3. The method of claim 1, wherein the second start CCE index is offset for more than one CORESET configured in the system.

4. The method of claim 1, wherein the allocation of the first start CCE index and the second start CCE index comprises an interleaved based CCE allocation.

5. The method of claim 1, wherein PDCCH start CCE index determination depends on a number of Orthogonal Frequency Division Multiplexing (OFDM) symbols allocated for PDCCH transmission and a number of Resource Blocks (RBs).

6. The method of claim 1, wherein the first UE is associated with the first cellular site, and wherein the second UE is associated with and communicating with a second cellular site.

7. The method of claim 6, wherein the second start CCE index is offset based on a maximum supported aggregation level in the second cellular site.

8. A system for controlling a cellular communication system comprising:
a first cellular site communicating with a first User Equipment (UE) and a second UE; and
a Medium Access Control (MAC) module responsible for allocating Physical Downlink Control Channel (PDCCH) Control Channel Elements (CCEs) for Physical Downlink Shared Channel (PDSCH), Physical Uplink Shared Channel (PUSCH) and control information transmission;
wherein a first start CCE index is allocated for a first Control Resource Set (CORESET-0) by the MAC module for the first UE;
wherein a second start CCE index is allocated for a second Control Resource Set (CORESET-1) by the MAC module for the second UE; and
wherein the first start CCE index for CORESET-0 is offset from the second start CCE index for CORESET-1 so that PDCCH CCE collision minimized and PDCCH decoding is improved for the first UE and the second UE.

9. The system of claim 8, wherein the first and second start CCE indexes are separated in Frequency or time domain.

10. The system of claim 8, wherein the second start CCE index is offset for more than one CORESET configured in the system.

11. The system of claim 8, wherein the allocation of the first start CCE index and the second start CCE index comprises an interleaved based CCE allocation.

12. The method of claim 8, wherein the PDCCH start CCE index determination depends on a number of Orthogonal Frequency Division Multiplexing (OFDM) symbols allocated for PDCCH transmission and a number of Resource Blocks (RBs).

13. The system of claim 8, wherein the first UE is associated with the first cellular site, and wherein the second UE is associated with and communicating with a second cellular site.

14. The system of claim 13, wherein the second start CCE index is offset based on a maximum supported aggregation level in the second cellular site.
